# EUROPEAN PATENT APPLICATION

(11) **EP 1 265 427 A1**
(43) Date of publication of application: **11.12.2002**
(21) Application number: 02253978.7
(22) Date of filing: 07.06.2002
(51) Int. Cl.: H04M 3/533, H04M 3/537

(54) **Voice mail with mailbox partitioning**

(30) Priority: 08.06.2001 ZA 200104698
(71) Applicant: Celldoc (Pty) Ltd, Johannesburg (ZA)
(72) Inventor: Rossouw, Deon Pieter, Johannesburg (ZA)
(74) Representative: Brunner, Michael John

(57) **Abstract**

A messaging system and method are disclosed for allowing a caller (24) to leave a message for a subscriber (24), the caller (24) and the subscriber (24) being in communication by means of a cellular network (14). The cellular network (14) has a primary message storage means for allowing a message to be stored by the caller (24) for the subscriber (24) for later retrieval by the subscriber (24). The system of the present invention comprises an IVR unit (12) that includes a secondary message storage means (18), a telephony interface (22) for allowing the subscriber (24) to access the secondary message storage means (18) and control means (20) for controlling the system. The secondary message storage means (18) comprises a plurality of separate and distinguishable storage addresses, with the subscriber (24) being associated with at least one of the storage addresses. In use, the control means (20) allows the subscriber (24) to select and retrieve a message from any one of his or her secondary storage addresses.

## Description

### BACKGROUND OF THE INVENTION

THIS invention relates to a messaging system and method, and in particular to a messaging system and method for use in conjunction with a cellular telephone.

It is common for cellular telephone networks to allow a person wishing to contact a recipient, to leave a message for the recipient via the recipient's cellular telephone. This is done by providing a mailbox, which will be referred to in the specification as a primary mailbox, in which the person may record and store the message.

However, the use of pagers as an additional means for allowing messages to be sent to a recipient is still relatively popular, and there are several reasons for this. The primary advantage of possessing a separate pager device is that it serves to notify the recipient that the message is being sent for a particular reason or from a particular group of persons. Doctors, for example, often make use of a separate pager device, with the knowledge that if a message is sent to him or her via his or her pager, that it is a medically-related message and not, for example, a private message.

It would therefore be desirable to combine the functionalities of a cellular telephone and a pager device into one unit. Although the broad idea of combining a cellular telephone and a pager into a single unit is not new, these units tend to be a hybrid, typically requiring substantial hardware modifications to either the cellular telephone or to the pager components of the unit.

It is the aim of the present invention to include the functionality of a pager device into a cellular telephone, without modifying the cellular telephone in any way.

### SUMMARY OF THE INVENTION

In broad terms, the invention provides a messaging system and method that allows conventional radio-paging services to be offered on a standard cellular telephone, with the cellular telephone not requiring any modifications, in addition to the conventional messaging functionality of the cellular telephone. Thus, the present invention facilitates the delivery of messages to a cellular telephone via a plurality of different cellular telephone numbers by providing a plurality of separate and distinguishable storage addresses.

In particular, and according to a first aspect of the invention, there is provided a telephone messaging system comprising:
a transceiver unit, associated with the subscriber, for providing a communications link between a caller wishing to leave a message for a subscriber, and the subscriber;
a subscriber-specific message storage device for storing a plurality of messages for a plurality of subscriber-assigned telephone numbers, with each of the subscriber-assigned telephone numbers being assigned a message type; and
control means for controlling the system and for allowing the subscriber to select and retrieve the messages for one of his or her subscriber-assigned telephone numbers.

The system advantageously includes notifying means for notifying the user that a message has been received.

Typically, the messaging system includes a messaging controller linked to the control means for sending a text message to the subscriber.
Preferably, the system includes prompting means for prompting the caller to provide a pager number, the pager number being specific to the subscriber.

According to a second aspect of the invention, there is provided a telephone messaging method for allowing a caller to leave a message for a subscriber, the method including the steps of:
providing a communications link between the caller and the subscriber;
providing a subscriber-specific message storage device for storing a plurality of messages for a plurality of subscriber-assigned telephone numbers, with each of the subscriber-assigned telephone numbers being assigned a message type; and
selecting and retrieving the messages for one of the subscriber-assigned telephone numbers.

The method includes the step of notifying the user that a message has been received.

Preferably, the method includes the step of sending a text message to the subscriber informing of the contents of the message.

Typically, the method includes the step of prompting the caller to provide a pager number, the pager number being specific to the subscriber.

### BRIEF DESCRIPTION OF THE DRAWINGS

- **Figure 1**: shows a block diagram of a messaging system according to the invention, and in particular an Interactive Voice Response unit that is configured to receive and send pager requests to a cellular telephone;
- **Figure 2**: shows a flow chart for the process executed by the Interactive Voice Response unit when it receives a request to page a subscriber; and
- **Figure 3**: shows a flow chart for the process executed by the Interactive Voice Response unit when a subscriber calls to retrieve a page or change settings of the messaging system.

### DESCRIPTION OF THE PREFERRED EMBODIMENT

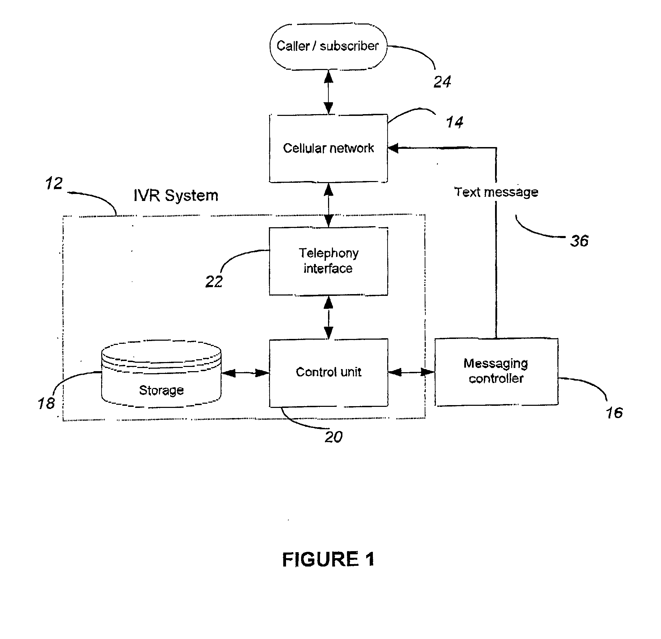

In the preferred embodiment, the messaging system of the present invention comprises an Interactive Voice Response (IVR) unit 12, which is used to communicate with a cellular network 14, and a messaging controller 16, as shown in Figure 1. The IVR unit 12 includes a storage system or database 18, a control unit 20 for controlling the operation of the IVR unit 12 and a telephony interface 22 for allowing the IVR unit 12 to interact with the cellular network 14.

Significantly, the storage database 18 comprises a plurality of separate and distinguishable storage addresses or mailboxes that may be used to store messages, whether voice messages or text (SMS) messages, with each subscriber to the system being allocated one or more of these mailboxes. The mailboxes in the database 18 define a secondary mailbox for each subscriber, with subscriber. The term "secondary mailbox" will be used in the specification to refer to the mailboxes in the storage database 18.

This arrangement is used to provide radio-paging functionality to users 24, with the users 24 either being a caller wishing to contact a subscriber, or a subscriber, wishing to receive messages or pages. The reference to radio-paging functionality, pages, and the like, should be interpreted in broad terms as referring to the delivery of a message over and above the messaging functionality of a conventional cellular telephone. In other words, the delivery of a message to a subscriber's secondary mailbox, and not to his or her primary mailbox.

To become a recipient of messages sent by the messaging system 10, a person has to subscribe to the paging service. The subscriber is then provided with a pager number, for example, 7777, and a Personal Identification Number (PIN), which is used to verify that a caller has permission to access the messages of the subscriber. The subscriber is also informed of the number that callers should dial to page the subscriber, for example, 123 5000, and the number that the subscriber should dial to retrieve the messages or change his/her personal settings, for example, 123-6000. The cellular telephone number of the subscriber is entered into the storage system 18, so that messages can be sent to that number when requested.

In the preferred embodiment, the number 123 5000 is a general number that is not specific to one particular subscriber and which allows a user 24 to interact with the system, with the pager number 7777 then being subscriber-specific. In other words, each subscriber-specific pager number, such as 7777 in the present example, corresponds to one of the separate and distinguishable secondary mailboxes in the storage database 18.

When a caller 24 wishes to contact a subscriber, the caller uses any telephone to dial the telephone number used for sending pages i.e. 123 5000 in the example above. The cellular network 14 routes this call to the IVR unit 12, which identifies that the caller wants to send a page based on the number that was dialed.

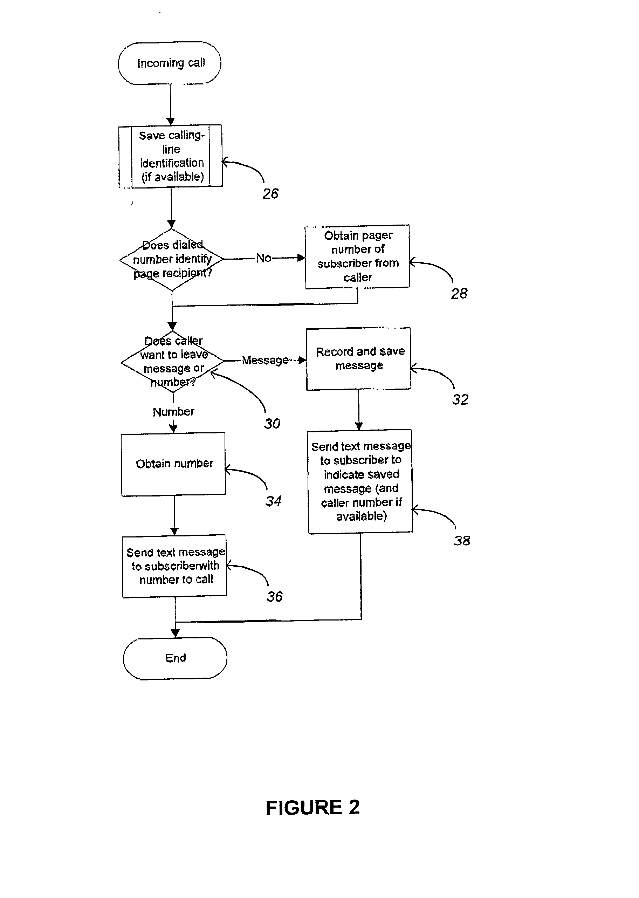

The sequence of steps carried out by the IVR unit 12 is illustrated in Figure 2. Firstly, the IVR unit 12 attempts to determine the number from which the call was made. If this information is made available by the cellular network 14, it is saved for later use, as indicated at 26. Thereafter, the dialed number is examined to determine whether it contains the details of the subscriber who is the intended recipient of the radio page or message. Many cellular networks allow callers to attach such information as part of the dialed number; thus the subscriber in the example above could be reached by dialing 123-5000-7777. If the intended recipient is not known in this fashion, the caller is prompted by the IVR unit 12 to provide the pager number of the intended recipient, shown by 28. Next, the caller is prompted to leave either the telephone number at which he or she can be contacted, or a voice message. This is indicated at 30.

If the caller chooses to leave a voice message, the message is recorded, as indicated by 32 and entered into the storage system 18. Alternatively, the caller could leave a contact number for the subscriber, as shown at 34. The IVR unit 12 thereafter plays a final message and terminates the call.

The IVR unit 12 then contacts the messaging controller 16 with an instruction to send a text message to the subscriber who is the intended recipient of the message, as indicated at both 36 and 38. The message contains the following text:
1. the contact number of the caller, if that was entered, or otherwise an indication that a voice message had been saved;
2. the number from which the caller had dialed, if that had been determined successfully at step 26; and
3. the time at which the page was received.

The messaging controller 16 instructs the cellular network to send this text to the subscriber's cellular telephone using the standard Short Messaging Service (SMS) protocol. The cellular telephone numbers of all subscribers are maintained in a caller database on the storage system 18. Alternatively, if the subscriber has chosen that his or her pages be redirected to a different subscriber, which is described further on in the specification, the message is sent to that subscriber's cellular telephone.

Alternatively, the caller may, instead of leaving a voice message, send a text message directly to the subscriber's secondary mailbox in the database 18. The remaining operation is, however, the same, with the text message simply then being forwarded onto the subscriber by the control unit 20 via the messaging controller 16.

Significantly, the subscriber will upon receiving the text message recognise that the message is in his or her secondary mailbox, by displaying the particular pager number, 7777 in this case, on the subscriber's cellular telephone.

Although the present invention has been described with a subscriber having only one pager number, the pager number having an associated message type, it is clear that a subscriber may have more than one pager numbers representing various message types. Thus, for example, a doctor may have three pager numbers or secondary mailboxes, 7777, 7778 and 7779, with 7777 corresponding to a message from a patient, 7778 corresponding to a message from a family member and 7779 corresponding to message from a golfing companion. The doctor may thus prioritise the messages that he needs to read, by selecting the appropriate secondary mailbox.

As a variation on the preferred embodiment, the caller can also be given various other options when connected to the IVR system. These options may include:
1. being connected to an emergency telephone number;
2. being connected to a live operator when such is available; or
3. listening to general information provided by the subscriber.

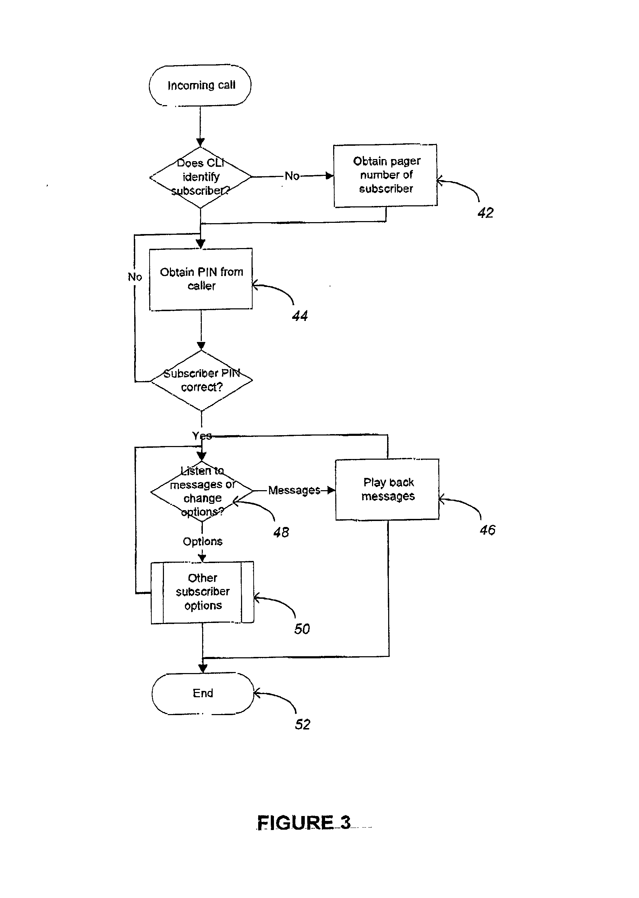

When the subscriber receives a message that a page has been received, he or she can either call the originator of the message directly, or call into the IVR system 12 to retrieve a voice message, if one has been left by the originator of the page. In the latter case, the cellular network 14 routes this call to the IVR unit 12, which identifies that the subscriber wants to retrieve a page or message from the number that was called, namely 123 6000 in the example given above. Figure 3 illustrates the sequence of steps carried out by the IVR unit 12 in this case.

Firstly, the IVR unit 12 attempts to determine the number from which the call was made, as indicated at 40. If that information is made available by the cellular network 14, it is used to determine which subscriber is calling the system. If the calling number is not available, or does not match a caller in the subscriber database, the caller is prompted for a subscriber pager number, shown at 42. Thereafter, the caller is prompted for a Personal Identification Number (PIN), which is used as a password to control access to the saved information, indicated at 44. If the caller enters the correct PIN, all saved messages in the particular secondary mailbox are retrieved from the storage system 18, and read back to the caller, shown at 46. As with a conventional voice mail system, the caller has the option to either save each message or delete it.

The subscriber is also given the option to perform various other functions when connected to the IVR system, as indicated at 48. These options will vary according to the specific application of the present invention, and may include the following:
1. the option to have all pages forwarded to another subscriber's mailbox;
2. the option to record a personal greeting for each secondary mailbox;
3. the option to record general information which is played back to callers upon request; and
4. the option to be connected to one or more service providers who are registered with the system (for example, if the service is used by medical practitioners, the subscriber may be connected to pathologists' offices for laboratory reports).

One skilled in the art will know that various aspects of the present invention can be changed while still remaining within the scope of the invention. For example, the set of standard IVR / voice mail options offered to callers and subscribers can be extended or altered in various ways, as is standard practice for IVR and voice mail systems. Similarly, the procedure that is used by a subscriber to select a forwarding mailbox can be extended in various ways. The system may, for example, require permission of the person to whom the messages will be forwarded before forwarding any messages to that person.

In a typical implementation, the IVR unit 12 is a DirectTalk 6 unit from International Business Machines, and the callflows in Figure 2 and Figure 3 are implemented using state tables on that unit. The messaging controller 16 is a Sema Short Message Service Center from SchlumbergerSema. The cellular network 14 is a GSM network, and both the IVR unit and the messaging controller are coupled to the GSM network using the Signalling System 7 (SS7) protocol.

In summary, a system has been demonstrated that permits radio-paging services to be offered on standard cellular telephone. Thus, the present invention facilitates the delivery of a message to a cellular telephone via a plurality of different cellular telephone numbers,

The present invention uses an Interactive Voice Response unit connected to a cellular telephone network to provide radio-paging functionality to users of standard cellular telephones. Users of the system have access to the normal functions of both a cellular telephone and a radio pager with an unmodified cellular telephone, with, in essence, the present invention providing a second storage facility or voice mailbox separate and distinguishable from a primary voice mailbox offered by conventional cellular telephone networks.

## Claims

1. A messaging system for allowing a caller (24) to leave a message for a subscriber (24), the caller (24) and the subscriber (24) being in communication by means of a communications network (14), the communications network (14) having a primary message storage means for allowing a message to be stored by the caller (24) for the subscriber (24) for later retrieval by the subscriber (24), the system comprising:
a secondary message storage means (18) comprising a plurality of separate and distinguishable storage addresses, with the subscriber (24) being associated with at least one of the storage addresses, with each storage address defining a message type;
a telephony interface (22) for allowing the subscriber (24) to access the secondary message storage means (18) so as to retrieve a message from a particular secondary storage address; and
control means (20) for controlling the system and for allowing the subscriber (24) to select and retrieve a message from any one of his or her secondary storage addresses.

2. A messaging system according to claim 1, which includes notifying means for notifying the user (24) that a message has been received.

3. A messaging system according to claim 2, wherein the notifying means includes specifying means for specifying the secondary storage address(es) in which the subscriber (24) has received a message.

4. A messaging system according to any one of the preceding claims, which includes a messaging controller (16) linked to the control means (20) for sending a text message to the subscriber (24).

5. A messaging system according to any one of the preceding claims, which includes prompting means for prompting the caller (24) to provide a pager number, the pager number corresponding to the secondary storage address in which the caller (24) would like to leave the message.

6. A messaging method for allowing a caller (24) to leave a message for a subscriber (24), the caller (24) and the subscriber (24) being in communication by means of a communications network (14), the communications network (14) having a primary message storage means for allowing a message to be stored by the caller (24) for the subscriber (24) for later retrieval by the subscriber (24), the method including the steps of:
providing a secondary message storage means (18) comprising a plurality of separate and distinguishable storage addresses, with the subscriber (24) being associated with at least one of the storage addresses, with each storage address defining a message type;
allowing the subscriber (24) to access the secondary message storage means (18) so as to retrieve a message from a particular secondary storage address; and
allowing the subscriber (24) to select and retrieve a message from any one of his or her secondary storage addresses.

7. A messaging method according to claim 6, which includes the step of notifying the user (24) that a message has been received.

8. A messaging method according to claim 7, which includes the step of specifying the secondary storage address(es) in which the subscriber (24) has received a message.

9. A messaging method according to any one of claims 6 to 8, which includes the step of sending a text message to the subscriber (24).

10. A messaging method according to any one of claims 6 to 9, which includes the step of prompting the caller (24) to provide a pager number, the pager number corresponding to the secondary storage address in which the caller (24) would like to leave the message.
